# EUROPEAN PATENT APPLICATION

(11) **EP 1 574 775 A1**
(43) Date of publication of application: **14.09.2005**
(21) Application number: 05005159.8
(22) Date of filing: 09.03.2005
(51) Int. Cl.: F16L 41/06, A62C 35/60

(54) **Apparatus and method for providing a branch connection to a pipe**

(30) Priority: 09.03.2004 GB 0405239
(71) Applicant: Project Fire Engineers Limited, Staffordshire ST18 0PH (GB)
(72) Inventor: Cain, Bernard, Stafford ST 17 0DL (GB)
(74) Representative: Lucking, David John

(57) **Abstract**

An apparatus (10) for providing a branch connection to a pipe (12), comprising a member (14) engageable with a surface of the pipe (12), the member (14) having:-
a first fluid conduit (20) beginning at an aperture (22), which aperture (22) faces the surface of the pipe (12) when the member (14) is engaged therewith, and extending away from the pipe (12) when the member (14) is engaged therewith; and
a second fluid conduit (32) in fluid communication with and extending transversely away from the first fluid conduit (20), a free end of the second fluid conduit (32) being connectable to additional pipework,
wherein an end of the first conduit (20) remote from the aperture (22) has an opening to allow access therethrough to create an opening in the pipe.

## Description

### Description of Invention

This invention relates to an apparatus and method for providing a branch connection to a pipe. More particularly, but not exclusively, the invention relates to an apparatus for providing a branch connection to pipework of a fire sprinkler system so that additional pipework can be added to an existing sprinkler system without necessarily requiring the existing sprinkler system to be drained of its water content.

It is often necessary to add additional pipework to an existing sprinkler system. For example it may be necessary to provide an additional sprinkler system in an adjacent space, or an extended building or the like, which must work in harmony with the existing sprinkler system. It has therefore been necessary hitherto when installing such additional pipework to drain the existing sprinkler system so that the additional pipework can be connected.

One purpose of a sprinkler system is to provide protection for human life and as such if the space or building where the existing sprinkler system is provided is occupied the existing sprinkler system cannot be drained during this time as there would be no operational sprinkler system in place in the event of a fire. It is therefore necessary, when installing the additional pipework, to carry out the work at a time when the space or building is not occupied, which is usually at night. This means that the existing sprinkler system can be drained of its contents, the additional pipework connected and the complete sprinkler system pressurised and tested without jeopardising the safety of persons who would normally occupy the space or building during the day.

There are many problems with this method of installing the additional pipework, such as the fact that all of the work has to be carried out at night and that the existing sprinkler system and the additional pipework have to be fully operational by the time the space or building is occupied the next morning. Firstly, this puts the workers installing the additional pipework under time pressures, which could lead to mistakes. Secondly, as the workers have to carry out the installation at night their hourly wage has to be increased from that of normal working hourly rates to reflect the unsociable hours of the work, which increases the overall cost of the installation. Thirdly, once the additional pipework has been connected it is necessary to then pressurise the whole sprinkler system and test it for leakage. This can be very time consuming considering that, most likely, it is already known that the existing sprinkler system was free from leakage, before it was drained, but has to be re-tested.

One might think that the above could be solved by providing a valve at an end of the existing sprinkler system so that if it is desired to provide additional pipework, it could be connected beyond the valve. After installation of the additional pipework, it could be pressurised and tested for leakage, after which the valve is opened so that the existing sprinkler system and additional pipework are in fluid communication with each other. This, however, is not an acceptable solution.

There are provisions in British Standard 5306, Part 2, 1990, Clause 20.1 and European Standard 12845, 2003, Clause 15.2 stating that a valve at an end of the existing sprinkler system is not allowable, as closure of the valve would render the newly added part of the sprinkler system inoperable.

There have been various proposals for devices for attachment to pipes to provide outlets therefrom. Some such devices have incorporated valves, for example, as disclosed in JP 2000 354640 A, JP 8159356 A, JP 2001 289385 A. However such devices have not been suitable for use in fire sprinkler systems, since the valves therein are arranged in such a way that, if used to add to an existing sprinkler system, the valves could render the newly added part of the sprinkler system inoperable.

Accordingly it is an object the present invention to provide for the addition of further pipework to an existing fire sprinkler system or the like in a way which would be acceptable.

According to a first aspect of the present invention, we provide an apparatus for providing a branch connection to a pipe, comprising a member for engagement with a surface of the pipe, the member having a first fluid passage beginning at an aperture, which aperture faces the surface of the pipe, and extends away from the pipe when the member is engaged therewith, and a second fluid passage in communication with and extending transversely away from the first fluid passage, an end of the second fluid passage being connectable to additional pipework, characterised in that a part of the first passage remote from the aperture has a closable opening, to allow access therethrough for creating an opening in the pipe; and the second passage communicates with the first passage between the closable opening and the aperture.

In apparatus' in accordance with the invention, a clear and non-closable communication is afforded between the second passage and the aperture/opening in the pipe, irrespective of closure of the closable opening. Hence the apparatus can be used for sprinkler systems.

The apparatus may be connected to the pipe by the provision of a clamping member engageable with a surface of the pipe opposite the said member, and connectable to said member so as to clamp the pipe between the members.

Sealing means is preferably provided between the surface of the member surrounding the aperture and the surface of the pipe, to provide a fluid-tight seal therebetween. The sealing means may be provided by an adhesive sealing substance, to assist in connecting the member to the pipe. Alternatively, the sealing means may be provided by an element of an elastomeric material such as rubber.

The second fluid passage may extend, substantially perpendicularly away from the first fluid passage, although the passages may extend at any desired inclination to one another.

The closable opening at an end part of the first passage remote from the aperture may be provided by a valve. Such valve may be a ball valve, which when open provides a clear passage for a drill element to pass therethrough and through the first passage for drilling the pipe.

An end closure cap may be provided in addition to the valve.

According to another aspect of the invention, we provide a method of providing a branch connection from a pipe using an apparatus according to the first aspect of the invention as above set forth, including the steps of :
engaging the apparatus with the pipe;
creating an opening in the pipe adjacent the aperture in the member, by passing a drilling element through the closable opening and the first fluid passage to engage the surface of the pipe;
removing the drilling element from the first fluid passage; and
closing the opening.

The method may include the step of connecting additional pipework to the free end of the second fluid passage. The additional pipework may be connected to the free end of the second fluid passage before the element creates an opening in the surface of the pipe.

The closable opening may be closed following removal of the drilling element by closure of the valve at the end of the first fluid passage, and preferably also by fitting an end cap thereto.

The drilling element may be a rotating drill bit or the like. The rotating tool may be connected to a powered drilling machine which may be connectable to the free end of the first fluid passage, or if a valve is connected to the free end of the first fluid passage, a free end of the valve.

As the additional pipework has, preferably, already been connected to the free end of the second fluid passage, when the drill bit is removed from the first fluid passage, fluid from the interior of the pipe can flow through the first passage, into the second passage and into the additional pipework.

If the drilling machine is connected to the free end of the valve, the drilling machine may be of a type which can remain connected to the free end of the valve during and after closing of the valve. Thus fluid escaping through the valve is kept to a minimum. The drilling machine can then be disconnected from the free end of the valve and any fluid which has escaped can be collected.

According to a further aspect of the invention, we provide a method of providing additional pipework in a fire sprinkler system, including the steps of:
engaging apparatus according to a first aspect of the invention with a pipe of the sprinkler system;
connecting additional sprinkler system pipework to the second fluid passage of the apparatus;
creating an opening in the pipe adjacent the aperture in the member of the apparatus by passing a drilling element through the closable opening and the first fluid passage to engage the surface of the pipe;
removing the drilling element from the first fluid passage; and
closing the opening of the first fluid passage.

Preferably the method includes testing the new sprinkler system pipework before the opening in the pipe is created.

The invention will now be described by way of example only with reference to the accompanying drawings, of which:
Figure 1 is a side view of an apparatus in accordance with the present invention connected to a pipe; and
Figure 2 is a schematic diagram of additional pipework leading to additional sprinklers connected to an existing sprinkler system incorporating an apparatus in accordance with the present invention.

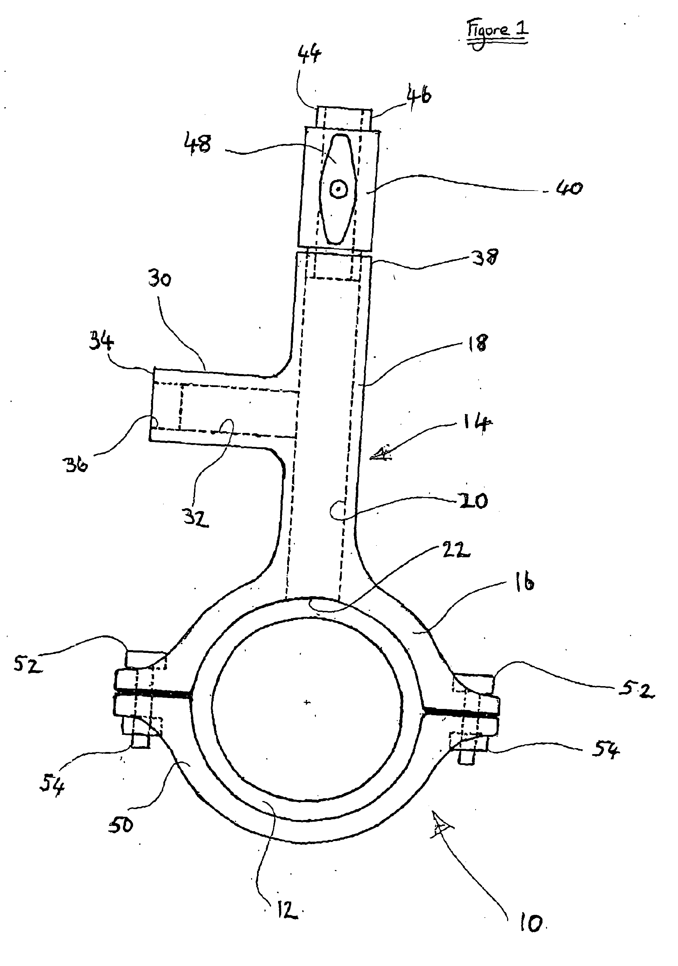

Referring to figure 1 there is shown, generally at 10, an apparatus in accordance with the present invention connected to a pipe 12. The apparatus 10 has a member, shown generally at 14, with a semi-circular collar 16 at one end, which engages a surface of the pipe 12. Extending away from the collar 16 is an elongate pipe 18 having a first cylindrical passage 20 therethrough, which begins at an aperture 22 in the collar 16.

Extending substantially perpendicularly away from the pipe 18 is a further pipe 30. The pipe 30 has a second cylindrical passage 32 therethrough. which communicates with the passage 20. A free end 34 of the pipe 30 is provided with an internally threaded section 36 to allow additional pipework to be connected thereto.

A free end 38 of the pipe 18, remote from the aperture 22, is connected to a valve 40. An externally threaded section of the valve 40 engages an internally threaded section of the free end 38 of the pipe 18 to provide a fluid tight seal therebetween. The valve 40 is of the type commonly known as a ball valve, i.e. having an angularly moveable spherical valve member with a cylindrical opening therethrough so as to afford an open passage through the valve 40 when in its open position. The valve 40 can be opened or closed by angular movement of the handle 48. In figure 1 the handle 48 is shown in a position in which the valve 40 is open, thus permitting flow of fluid from the conduit 20 through the valve 40. However, other types of valves could be used so long as they allow access therethrough to create an opening in the pipe as described hereafter.

A free end 44 of the valve 40 has an externally threaded section 46 to allow an end cap (not shown) to be connected thereto. The end cap and its purpose will be described in greater detail hereinafter.

The apparatus also includes a clamping member 50. The member 50 is semi-circular like the collar 16 of the member 14 and engages with an opposite surface of the pipe 12 so as to clamp the pipe 12 between the collar 16 and the member 50. The collar 16 has a pair of lugs with apertures, one provided at each end of the collar 16. The clamping member 50 also has a pair of apertures which, when the collar 16 and the member 50 are engaged with the pipe 12, are aligned so as to permit respective bolts 52 to pass therethrough. Nuts 54 engage with the bolts 52 to urge the collar 16 and the member 50 towards each other, thus clamping the pipe 12 therebetween.

In order to inhibit movement of the apparatus relative to the pipe 12 the respective surfaces of the collar 16 and the changing member 50 which engage the surface of the pipe 12 may be adhered to the surface of the pipe 12. The adhesive used should preferably also provide a fluid tight seal between a surface of the collar 16 surrounding the aperture 22 and the adjacent surface of the pipe 12. The reason for such a fluid tight seal will be discussed hereinafter.

In figure 1 the pipe 12 does not yet have an opening opposite the aperture 22, thus it is not possible for fluid to flow from the interior of the pipe 12 into the conduit 18.

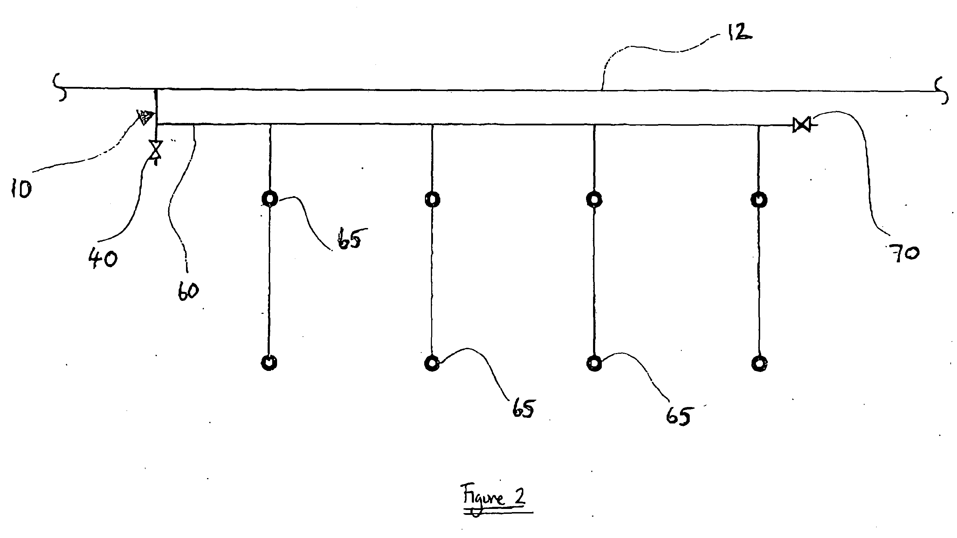

'The following description relates to the provision of additional sprinklers for a sprinkler system, but it must be appreciated that the invention could be utilised in other pipework. The pipe 12 (with reference to an existing sprinkler system) provides a supply of liquid, usually water, under pressure to a plurality of sprinklers. If it is desired to connect additional pipework 60, incorporating additional sprinklers 65 (as shown schematically in figure 2), to the pipe 12, one can either drain the entire sprinkler system of its water content, or tap into the pipe 12, whilst under pressure. The former raises problems regarding when the work can be undertaken (e.g. most probably at night) and the latter can be dangerous and usually results in wastage of large quantities of liquid from the pipe 12. The present invention provides another method of connecting the additional pipework and an apparatus for achieving this.

Firstly, the collar 16 and the clamping member 50 must be engaged with the pipe 12, as described above, and adhered thereto to provide a fluid tight seal therebetween. The additional pipe work 60, including additional sprinklers 65 and a drainage valve 70, is then connected to the free end 34 of the second pipe 30. The additional pipework 60 and additional sprinklers 65 are then pressurised with liquid and tested for leakage.

In order to allow liquid communication between the interior of the pipe 12 and the conduits 18, 32 the follow steps need to be carried out. Firstly, with the valve 40 open (as shown in figure 1), an elongate tool element (not shown), such as a drill bit connected to a drilling machine is passed through the valve 40 and the conduit 18 until it engages the surface of the pipe 12 opposite the aperture 22. The drilling machine may, preferably, be of the type connectable to the free end 44 of the valve 40 before drilling takes place, thus inhibiting and/or collecting any liquid which flows through the valve 40.

The drill bit is then rotated by the drilling machine until an opening is created in the pipe 12. As the liquid in the pipe 12 is under pressure, it flows into the conduit 18 and towards the valve 40 and the conduit 32. However, as the drilling machine is connected to the free end 44 of the valve 40 little or no liquid escapes. The drill bit is then retracted until it no longer lies within the valve 40. The valve 40 is then closed.

Any pressure difference between the liquid in the interior of the pipe 12 and the liquid in the pressurised additional pipework 60 equalises and if the existing sprinkler system and the additional pipework 60 leading to the additional sprinklers 65 are required to function they are both fed by liquid from the pipe 12.

To ensure that, if there is any accidental opening of the valve 40, no leakage of liquid occurs, the free end of the valve 40 is provided with an end cap (not shown), which engages the external thread 46. If it is desired to drain the sprinkler system the end cap can be removed and the valve 40 opened. When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An apparatus (10) for providing a branch connection to a pipe (12), comprising a member (14) for engagement with a surface of the pipe, the member (14) having:
a first fluid passage (20) beginning at an aperture (22), which aperture faces the surface of the pipe, and extends away from the pipe when the member is engaged therewith; and ,
a second fluid passage (20) in communication with and extending transversely away from the first fluid passage (20), a free end of the second fluid passage being connectable to additional pipework, **characterised in that**
a part (38) of the first passage (20) remote from the aperture has a closable opening, to allow access therethrough for creating an opening in the pipe; and
the second passage (32) communicates with the first passage (20) between the closable opening and the aperture (22).

2. Apparatus according to claim 1 further **characterised by** a member (50) engageable with a surface of the pipe opposite the member (14) and connectable to the member (14) so as to clamp the pipe therebetween.

3. Apparatus according to claim 1 or claim 2 further **characterised in that** sealing means is provided between the surface of the member (14) surrounding the aperture (22) and the surface of the pipe (12) to provide a fluid tight seal therebetween.

4. Apparatus according to claim 3 further **characterised in that** the sealing means is an adhesive, which adhesive assists in connecting the member to the pipe.

5. Apparatus according any preceding claim wherein the second fluid passage (32) extends substantially perpendicularly away from the first fluid passage (20).

6. Apparatus according to any preceding claims further **characterised by** a valve (40) at said part (38) of the first passage (20).

7. Apparatus according to claim 6 further **characterised in that** when the valve (40) is open it provides a clear passage for a drill element to pass 'therethrough and through the first passage (20) for drilling the pipe (12).

8. A method of providing a branch connection from a pipe using an apparatus according to any one of claims 1 to 17, including the steps of:
engaging the apparatus (10) with the pipe (12);
creating an opening in the pipe (12) adjacent the aperture (22) in the member (14) by passing a drilling element through the closable opening and the first fluid passage (20), to engage the surface of the pipe;
removing the drilling element from the first fluid passage; and
closing the opening.

9. A method of providing additional pipework in a fire sprinkler system, including the steps of:
engaging apparatus according to any one of claims 1 to 7 with a pipe (12) of the system;
connecting additional sprinkler system pipework (60) to the second fluid passage (32) of the apparatus;
creating an opening in the pipe (12) adjacent the aperture (22) in the member (14) by passing a drilling element through the double opening and the first fluid passage (20) to engage the pipe;
removing the drilling element from the first fluid passage (20); and
closing the opening of the first fluid passage.

10. A method accordingly to claim 9 including testing the additional pipework before the opening in the pipe is created.
